# EUROPÄISCHE PATENTSCHRIFT

(11) **EP 2 000 358 B1**
(45) Veröffentlichungstag und Bekanntmachung des Hinweises auf die Patenterteilung: **03.08.2016**
(21) Anmeldenummer: 08009904.7
(22) Anmeldetag: 30.05.2008
(51) Int. Cl.: B60Q 11/00, H05B 33/08

(54) **Schaltungsanordnung zur Versorgung von Leuchtdioden in einem Anhänger**
Circuit for supplying power to LED in a trailer
Circuit d'alimentation pour LED sur une remorque

(30) Priorität: 01.06.2007 DE 202007007775 U; 01.06.2007 DE 202007007776 U; 01.06.2007 DE 202007007777 U
(43) Veröffentlichungstag der Anmeldung: 10.12.2008
(60) Teilanmeldung: 11006680.0
(73) Patentinhaber: ConWys AG, 6023 Rothenburg (CH)
(72) Erfinder: Wystron, Alexander, 6005, Luzern (CH)
(74) Vertreter: Stenger Watzke Ring

(56) Entgegenhaltungen:
- EP-A- 1 653 782
- EP-B1- 1 368 997
- DE-A1- 10 215 472
- DE-A1-102004 045 435

## Beschreibung

Die vorliegende Erfindung betrifft eine Schaltungsanordnung mit den Merkmalen nach dem Oberbegriff des Anspruchs 1. Die Erfindung betrifft darüber hinaus einen Adapter mit einer erfindungsgemäßen Schaltungsanordnung sowie ein Verfahren mit den Merkmalen nach dem Oberbegriff des Anspruchs 11.

Fahrzeuge für den Straßenverkehr bestehen zum Teil aus einem Fahrzeugzug, der ein Zugfahrzeug sowie einen oder mehrere Anhänger aufweisen kann. Zugfahrzeug und Anhänger sind miteinander gekoppelt. Zugfahrzeuge können beispielsweise Personenkraftwagen, Lastkraftwagen oder dergleichen sein. Im Sinne der Erfindung kann ein Zugfahrzeug darüber hinaus auch ein von einem Zugfahrzeug gezogener Anhänger sein, an dem ein weiterer Anhänger angekoppelt ist. Anhänger sind Fahrzeuge, die während eines Fahrtzustands nicht aktiv angetrieben werden. Sie können demnach auch in Schlepp genommene Fahrzeuge umfassen, die einen eigenen Antrieb aufweisen, der jedoch während der Fahrt nicht aktiv ist. Darüber hinaus sind Anhänger beispielsweise solche mit einer eigenen Deichsel oder auch Auflieger, insbesondere Fahrradträger oder dergleichen. Diese können über Kopplungsmittel mit dem Zugfahrzeug gekoppelt werden, um den Fahrzeugzug zu bilden. Neben einer mechanischen Kopplung ist in der Regel auch eine elektrische Kopplung vorgesehen. Dies ist durch gesetzliche Vorschriften begründet, wonach unter anderem eine ordnungsgemäße Beleuchtung des Anhängers vorgeschrieben ist, was beispielsweise einen bestimmungsgemäßen Betrieb von Rücklichtern, Blinklichtern, Bremslichtern und dergleichen umfasst. Dazu ist eine elektrische Verbindung zwischen einer Spannungsquelle des Zugfahrzeugs und einer Leuchte des Zugfahrzeuganhängers vorgesehen. Die elektrische Verbindung weist in der Regel eine Steckverbindung mit einem Stecker und einer Steckkupplung auf. Der Stecker sowie die Steckkupplung sind mit entsprechenden Verbindungsleitungen des Zugfahrzeugs beziehungsweise des Anhängers verbunden.

Bislang sind die Anhänger zu den gesetzlich vorgeschriebenen Beleuchtungszwecken und darüber hinaus mit Leuchten versehen, die Glühlampen als Leuchtmittel aufweisen und die die entsprechenden Beleuchtungen ermöglichen. Zum Betrieb dieser Glühlampen ist oftmals jeweils ein Ausgangsanschluss der Steckkupplung beziehungsweise Steckdose des Zugfahrzeugs entsprechend ausgerüstet und wird über den elektrischen Stecker mit den entsprechenden Glühlampen des beziehungsweise der Anhänger elektrisch verbunden. Moderne Steuerungen für den Ausgangsanschluss des Zugfahrzeugs sehen eine Überwachung der Leuchten des Anhängers vor, wobei insbesondere Kurzschluss und Unterbrechung des Glühfadens der Glühlampe überwacht wird. Liegt ein entsprechender Defekt vor, erfolgt eine Meldung im Zugfahrzeug, insbesondere im Bereich der Armaturen, so dass ein Führer des Zugfahrzeugs über die Störung beziehungsweise die Funktion der entsprechenden Leuchte informiert ist.

Zur Überwachung wird steuerungsseitig beispielsweise ein Strom bei Betrieb der entsprechenden Glühlampe der Leuchte gemessen. Ist dieser in einem zulässigen Bereich, erfolgt keine Meldung. Überschreitet beziehungsweise unterschreitet der Strom dagegen einen vorgebbaren Vergleichswert wird eine entsprechende Fehlermeldung im Zugfahrzeug angezeigt. Neben der Überwachung eines Einschaltzustands der Glühlampe kann ferner eine Überwachung der Glühlampe im ausgeschalteten Zustand durchgeführt werden. Dabei wird im ausgeschalteten Zustand ein kurzer Spannungsimpuls auf die Glühlampe geschaltet, so dass diese nicht sichtbar aufleuchten kann. Während des Spannungsimpulses wird der entsprechende Strom durch die Glühlampe gemessen und wie vorher bezüglich des eingeschalteten Zustands ausgewertet. Eine entsprechende Meldung erfolgt im Zugfahrzeug.

Mittlerweile werden Leuchten von Anhängern statt mit Glühlampen mit Leuchtdioden als Leuchtmittel ausgerüstet. Die Leuchtdioden können beispielsweise durch einzelne Leuchtdioden, aber auch durch Leuchtdioden-Anordnungen (Arrays) in einer Zusammenschaltung von mehreren einzelnen Leuchtdioden sowie auch durch andere lichtemittierende Halbleiter wie LED's oder dergleichen gebildet sein. Die Zusammenschaltung kann durch eine Parallelschaltung, eine Serienschaltung sowie auch Kombinationen hiervon, beispielsweise in Form von Matrixschaltungen und dergleichen gebildet sein.

Bei der Verwendung von Leuchtdioden als Leuchtmittel bei Leuchten des Anhängers besteht nunmehr das Problem, dass vorhandene Ausgangsanschlüsse des Zugfahrzeugs zu deren Ansteuerung ungeeignet sind. Dies resultiert zum einen aus unterschiedlichen Anforderungen hinsichtlich der Betriebsspannung sowie auch unterschiedlichen Anforderungen hinsichtlich des Stromverbrauchs. In der Regel benötigen lichtemittierende Halbleiter wie Leuchtdioden erheblich weniger elektrische Energie als vergleichbar leuchtstarke Glühlampen. Aus diesem Grund können die bei den bisherigen Anschlüssen vorhandenen Überwachungseinrichtungen nicht zum Einsatz kommen. Zwar kann durch Spannungsanpassung die Anforderung hinsichtlich der Betriebsspannung erreicht werden, jedoch erfordert das unterschiedliche physikalische Verhalten dieser Leuchtmittel ein gänzlich anderes Überwachungskonzept. Wird beispielsweise eine Leuchtdiode mit einem für Glühlampen geeigneten Spannungsimpuls im ausgeschalteten Zustand beaufschlagt, so erzeugt diese aufgrund ihres unterschiedlichen physikalischen Prinzips im Gegensatz zur Glühlampe eine deutlich sichtbare Leuchtwirkung. Dies führt zu störender Lichtaussendung und ist im Übrigen nicht konform mit der Gesetzgebung.

Das Problem tritt insbesondere dann auf, wenn ein Zufahrzeug, dessen Ausgangsanschlüsse für den Betrieb normaler Glühlampen als Leuchten am Anhänger ausgerüstet ist, mit einem Anhänger elektrisch verbunden werden soll, der anstelle von Glühlampen Leuchtdioden als Leuchten aufweist. In diesem Fall sind die Anschlüsse inkompatibel, was nicht nur zu Fehlfunktionen der Leuchten des Anhängers sondern auch zu Defekten der Ausgangsanschlüsse beziehungsweise der Leuchtdioden im Anhänger führen kann.

Darüber hinaus wird zugfahrzeugseitig auf den Ausgangsanschluss des Zugfahrzeugs ein Prüfpotential geschaltet, mit dem der Anschluss eines Anhängers an das Zugfahrzeug erkannt werden soll. Bei glühlampenbasierten Leuchten des Anhängers kann aufgrund des geringen elektrischen Widerstands des Glühlampenfadens das Prüfpotential gesenkt werden. Hierdurch kann ein ordnungsgemäßer Anschluss des Anhängers an das Zugfahrzeug erkannt werden, ohne dass die Beleuchtungsfunktion der Anhängerleuchten beeinträchtigt werden würde. Bei Anschluss eines Anhängers mit leuchtdiodenbasierten Leuchten kann hierbei jedoch eine unerwünschte, unzulässige Leuchtwirkung aufgrund der sehr abweichenden physikalischen Eigenschaften von Leuchtdioden hervorgerufen werden. Bei leuchtdiodenbasierten Anhängerleuchten wird ferner das Prüfpotential nicht hinreichend abgesenkt, so dass die Anhängerdetektionsfunktion nicht mehr gewährleistet ist.

Aus dem Stand der Technik ist zudem gemäß der EP 1 653 782 A2 ein LED-Kontrollgerät für Fahrzeugleuchten bekannt geworden. Dieses betrifft insbesondere eine Blinkwiderstandsschaltung zur Anpassung von mit Glühlampen bestückten Blinkereinrichtungen an mit LED's bestückten Blinkereinrichtungen an Zugmaschinen, Anhängern oder Auflegern. Dabei ist vorgesehen, dass beim Start eine Betriebsspannung am Blinkereingang einer Blinkerwiderstandssteuerung angelegt ist, die durch Öffnung eines Schaltelementes einen Eingangswiderstand ausschaltet. Damit wird eine thermische Zerstörung verhindert. Der von der Blinkerfunktion aufgenommene Strom wird in der Blinkerwiderstandssteuerung durch eine Konstantstromregelung auf den Wert einer Glühlampe angeglichen. Durch eine Strommessung wird der vom Blinker aufgenommene Strom gemessen und mit einem Mindestwert verglichen. Diese Stromregelung und der Ausgang werden ausgeschaltet, sobald der Wert des gemessenen Stromes unter der Mindestgrenze oder über einen Maximalwert liegt.

Die EP 1 368 997 B1 betrifft ein Gerät zur Modifizierung eines elektrischen Stroms, der durch mindestens ein Leuchtmittel, bei dem es sich nicht um eine Glühlampe handelt, gezogen wird, wobei dieses Gerät unter anderem beinhaltet ein Steuergerät, das einen Strombegrenzer und eine Stromsenke so ansteuert, dass die Stromwellenform dergestalt geändert wird, dass sie einen im Wesentlichen plateauähnlichen Bereich um einen Stromhöchstwert herum aufweist.

Aus der DE 102 15 472 A1 ist ein Verfahren zur Simulation der Stromkennlinie einer Glühlampe bekannt geworden. Dabei wird auf einer Stromleitung ein der Stromkennlinie der Glühlampe zumindest ähnlicher Stromverlauf erzeugt, der von einer Strommessschaltung gemessen wird. Dabei wird der Stromfluss auf der Stromleitung direkt oder indirekt durch die periodische Ansteuerung einer elektrischen Last eingestellt, wobei die Pulsweite des periodischen Steuersignals zeitlich entsprechend des zu simulierenden Stromverlaufs moduliert wird.

Die DE 10 2004 045 435 A1 betrifft eine Vorrichtung zur Überwachung der Funktion von entweder nur Glühlampen oder nur LED-Leuchten in beispielsweise Blinkergehäusen von Kraftfahrzeugen. Diese Vorrichtung ist mit einer Einrichtung ausgestattet, die bei Ausfall einer LED-Leuchte auf der einen Seite des Fahrzeuges, bei Betätigung des Blinkers für diese Seite, die Blinkfrequenz erhöht, oder durch einen Bordrechner erkannt wird, dass eine Glühlampe oder eine LED-Leuchte in dem einen Stromkreis ausgefallen ist und der Bordrechner dies im Armaturenbrett zur Anzeige bringt. Dabei ist vorgesehen, dass in einem Stromkreis sowohl eine Glühlampe mit einem höheren Leistungsverbrauch wie auch eine LED-Leuchte mit niedrigerem Leistungsverbrauch vorgesehen sein kann, wobei der Stromkreis eine elektronische Schaltung enthält, die erkennt, ob eine Glühlampe oder eine LED-Leuchte eingebaut ist und die Funktion oder Nichtfunktion der Glühlampe oder LED-Leuchte durch eine elektronische Schaltung festgestellt wird und beispielsweise ein Bordrechner das Ergebnis erfassen kann.

Die EP 1 458 222 A1 betrifft eine Warneinrichtung für eine LED. Diese Einrichtung verfügt über einen ersten und einen zweiten Widerstand, wobei der erste Widerstand in Serie mit der LED und der zweite Widerstand parallel zur LED geschaltet ist. Die Warneinrichtung verfügt desweiteren über eine Steuereinrichtung die die Spannung über den zweiten Widerstand steuert, um so mittels eines Schalters einen parallel zur LED geschalteten Lastwiderstand zuzuschalten, wenn der durch die LED fließende Strom einen Schwellwert überschreitet.

Die vorliegende Erfindung hat es sich zur **Aufgabe** gemacht, hier eine Möglichkeit zu schaffen, mit der die vorgenannten Probleme beseitigt werden können.

Bezüglich der Schaltungsanordnung schlägt die Erfindung als **Lösung** vor eine Schaltungsanordnung nach den Merkmalen gemäß Anspruch 1.

Mit der Erfindung ist es demnach erstmals möglich, durch einfache Zwischenschaltung der Schaltungsanordnung in die elektrische Verbindung zwischen dem Anhänger und dem Zugfahrzeug eine geeignete Anpassung zu erreichen, so dass ein mit Leuchtdioden bestückter Anhänger hinsichtlich seiner elektrischen Anlage ebenso betreibbar ist, wie ein Anhänger, der mit Glühlampen bestückt ist. Eingriffe in elektrische Anlagen des Zugfahrzeugs beziehungsweise des Anhängers können weitgehend vermieden werden. Zur Erreichung dieses Zieles ist zunächst eine Glühlampensimulationseinheit vorgesehen, mittels der bezüglich des Ausgangsanschlusses des Zugfahrzeugs die Funktion einer Glühlampe simuliert wird. Hierdurch kann erreicht werden, dass die bereits bezüglich des Ausgangsanschlusses des Zugfahrzeugs vorgesehenen Überwachungseinrichtungen ordnungsgemäß weiterhin zur Überwachung eingesetzt werden können. Es sind demnach zugfahrzeugseitig keine Veränderungen bezüglich des Ausgangsanschlusses vorzunehmen. Die Glühlampensimulationseinheit ist vorzugsweise dazu vorgesehen, im eingeschalteten Zustand den einer vergleichbaren Glühlampe entsprechenden Strom durch den Ausgangsanschluss im Zugfahrzeug fließen zu lassen. Dies kann durch einen geeignet steuerbaren Halbleiter erfolgen. Dieser kann beispielsweise durch einen Transistor, insbesondere einen Feldeffekttransistor und dergleichen gebildet sein. Vorzugsweise ist der Transistor derart ausgelegt, dass er die entsprechende Leistung als Verlustleistung abführen kann. Natürlich kann ein zusätzlicher Widerstand vorgesehen sein, der für die Verlustleistungsabfuhr zuständig ist. In diesem Fall kann der Transistor kleiner konzipiert sein. Die Realisierungsmöglichkeit mittels eines elektrischen Widerstands erlaubt es ferner, den Transistor als Schalttransistor zu betreiben, wodurch dieser hinsichtlich seiner thermischen Beanspruchung besonders günstig gewählt werdenkann. Diese Schaltungsvariante erlaubt es darüber hinaus, weitere Halbleiterschalter wie Tyristoren, GTO's und dergleichen einzusetzen.

Weiterhin umfasst die Schaltungsanordnung eine Diagnoseeinrichtung, mittels der die bestimmungsgemäße Funktion der leuchtdiodenbasierten Leuchte des Anhängers überwacht werden kann. Vorzugsweise wird hierzu ein Storm der Leuchte des Anhängers gemessen und ausgewertet. Die Diagnoseeinrichtung weist deshalb zum Beispiel wenigstens eine Strommesseinheit und eine Vergleichseinheit auf. Die Strommesseinheit kann beispielsweise durch einen Messverstärker, insbesondere auf Operationsverstärkerbasis gebildet sein. Die Strommesseinheit erlaubt es, den Verbrauchsstrom der Leuchte des Anhängers zu messen und ein entsprechendes Signal an die Vergleichseinheit abzugeben. Das Signal kann beispielsweise ein analoges Signal sein, welches proportional zum Verbrauchsstrom der Leuchte des Anhängers ist. Das Signal selbst kann beispielsweise durch eine elektrische Spannung gebildet sein. Die Vergleichseinheit vergleicht das gelieferte Signal der Strommesseinheit mit einem vorgebbaren Vergleichswert. Die Vergleichseinheit kann hierzu einen Komparator mit zwei Eingangsanschlüssen aufweisen, an dessen einem Eingang das Signal der Strommesseinheit und an dessen anderem Eingang der vorgebbare Vergleichswert aufgeschaltet sind. Der Vergleichswert ist vorzugsweise durch eine elektrische Spannung gebildet. In Abhängigkeit vom Vergleich liefert die Vergleichseinheit ebenfalls ein Signal, insbesondere in Form einer elektrischen Spannung. Dieses Signal wird an die Glühlampensimulationseinheit abgegeben. In Abhängigkeit des Vergleichsergebnisses ist somit die Glühlampensimulationseinheit steuerbar, und zwar vorzugsweise einschaltbar und/oder ausschaltbar.

Befindet sich der Verbrauchsstrom der Leuchte des Anhängers in einem zulässigen Betriebsbereich, so gibt die Strommesseinheit ein entsprechendes elektrisches Signal an die Vergleichseinheit ab, die dieses mit dem Vergleichswert vergleicht. In diesem Fall wird die Glühlampensimulationseinheit aktiviert, das heißt eingeschaltet, so dass zugfahrzeugseitig ein Stromverbrauch einer Glühlampe erkannt werden kann. Tritt bei der Leuchte des Anhängers ein Fehler auf, beispielsweise indem der Verbrauchsstrom reduziert ist beziehungsweise null ist, gibt die Strommesseinheit ein entsprechendes Signal an die Vergleichseinheit ab, wobei ein Vergleich mit dem Vergleichswert dazu führt, dass die Glühlampensimulationseinheit deaktiviert beziehungsweise ausgeschaltet wird. Zugfahrzeugseitig wird nunmehr ein zu niedriger Stromverbrauch der Leuchte des Anhängers erfasst und eine entsprechende Meldung an den Führer des Zugfahrzeugs ausgegeben. Auf diese Weise kann die Funktion der Leuchte des Anhängers basierend auf Leuchtdioden sicher und zuverlässig wie eine Leuchte basierend auf Glühlampen überwacht werden.

Gemäß einer Weiterbildung wird vorgeschlagen, dass die Schaltungsanordnung eine zweite Vergleichseinheit aufweist, die das von der Strommesseinheit gelieferte Signal mit einem zweiten vorgebbaren Vergleichswert vergleicht. Diese Schaltungsvariante erlaubt es, einen Bereich für den Verbrauchsstrom der Leuchte des Anhängers vorzugeben, innerhalb dessen eine ordnungsgemäße Leuchte des Anhängers angenommen werden kann. Weicht der Verbrauchsstrom aus dem zulässigen Bereich ab, kann eine Deaktivierung der Glühlampensimulationseinheit vorgesehen sein, so dass nicht nur Unterbrechungen bei der Leuchte des Anhängers sondern auch Kurzschlüsse erfasst werden können. Die Zuverlässigkeit kann auf diese Weise weiter verbessert werden.

Eine Weiterbildung sieht vor, dass die Schaltungsanordnung eine zweite Strommesseinheit aufweist, die den Verbrauchsstrom der Leuchte des Anhängers misst und ein entsprechendes zweites Signal an eine zweite Vergleichseinheit abgibt. Durch diese Ausgestaltung kann ebenfalls erreicht werden, dass ein zulässiger Betriebsbereich für den Verbrauchsstrom der Leuchte des Anhängers geschaffen wird. Natürlich kann diese Ausgestaltung auch mit der Vorbeschriebenen in Kombination vorgesehen sein. Vorteilhaft kann der Betriebsbereich für den Verbrauchsstrom auf Basis eines einzigen Vergleichswerts erreicht werden.

Gemäß einer weiteren Ausgestaltung wird vorgeschlagen, dass die zweite Vergleichseinheit das zweite Signal mit einem zweiten vorgebbaren Vergleichswert vergleicht. Diese Ausgestaltung erlaubt es, zwei völlig getrennte und voneinander unabhängige Vergleichsergebnisse zu erzielen, die für unterschiedliche Anwendungen bereitgestellt werden können. So ist es gemäß dieser Ausgestaltung möglich, mit einem ersten Vergleichsergebnis die Funktion einer Leuchte des Anhängers auf Leuchtdiodenbasis zu überwachen und mit einem zweiten Vergleichsergebnis festzustellen, ob der Anhänger eine glühlampenbasierte Leuchte aufweist.

Hierbei erweist es sich von besonderem Vorteil, wenn eine Deaktivierungsschaltung für die Glühlampensimulationseinheit vorgesehen ist, welche Deaktivierungsschaltung in Abhängigkeit des Vergleichsergebnisses des zweiten Signals mit dem zweiten Vergleichswert steuerbar ist. Diese erlaubt es nämlich, die Glühlampensimulationseinheit zu deaktivieren, sobald mittels des zweiten Vergleichsergebnisses festgestellt worden ist, dass die Leuchte des Anhängers durch eine Glühlampe gebildet ist. Die Schaltungsanordnung wird hierdurch derart ertüchtigt, dass ein Nutzer beziehungsweise der Führer des Zugfahrzeugs nicht mehr darauf zu achten braucht, welche Art von Leuchtmitteln in der Leuchte des Anhängers vorgesehen ist. Die Schaltungsanordnung ermöglicht es somit, automatisch zu erkennen, welche Leuchtmittel in der Leuchte des Anhängers vorgesehen sind und kann dementsprechend eine Ansteuerung bewirken.Vorzugsweise sind die erste und/oder die zweite Strommesseinheit und/oder der erste und/oder der zweite Vergleichswert einstellbar. Dies erlaubt es, die Strommesseinheiten und die Vergleichswerte auf individuelle Bedürfnisse anzupassen. Vorteilhaft ist dies beispielsweise, wenn bei einer Leuchte des Anhängers das Leuchtmittel gegen ein Leuchtmittel ausgewechselt wird, welches abweichende elektrische Eigenschaften gegenüber dem vorher installierten Leuchtmittel aufweist.

Natürlich kann die Schaltungsanordnung auch einen Energiespeicher aufweisen, der insbesondere dafür vorgesehen ist, eine Energieversorgung der Diagnoseeinrichtung sowie gegebenenfalls der Glühlampensimulationseinheit sicherzustellen. Vorteilhat ist dies unter anderem dann, wenn die Energieversorgung über eine entsprechende Signalleitung aus dem Zugfahrzeug erfolgt. Gerade bei wechselnden Signalen wird die Diagnoseeinrichtung ebenfalls ein- beziehungsweise ausgeschaltet, wobei während Ein- und Ausschaltphasen Störsignale auftreten können. Mittels des Energiespeichers kann dieses Problem reduziert werden.

Weiterhin ist gemäß der Erfindung vorgesehen, dass die Schaltungsanordnung eine analoge elektronische Schaltung aufweist. Durch die analoge elektronische Schaltung kann ein einfacher und außerordentlich kompakter Aufbau erreicht werden. Die analoge elektronische Schaltung kann durch elektronische Bauelemente gebildet sein, beispielsweise Widerstände, Transistoren, Operationsverstärker, Komparatoren und/oder dergleichen.

Gemäß einer weiteren vorteilhaften Ausgestaltung wird vorgeschlagen, dass die erste Strommesseinheit, die zweite Strommesseinheit, die erste Vergleichseinheit, die zweite Vergleichseinheit, die Glühlampensimulationseinheit und/oder die Deaktivierungsschaltung mit elektrischer Energie aus einem zugfahrzeugseitigen Steuersignal für die Leuchte des Anhängers versorgbar ist. Eine separate Energieversorgung für die Schaltungsanordnung kann somit eingespart werden. Darüber hinaus können Bauteile und Gewicht eingespart werden.

Mit der Erfindung wird ferner ein Adapter mit einer Schaltungsanordnung der Erfindung vorgeschlagen. Der Adapter erlaubt es, die Schaltungsanordnung einfach und bequem in die elektrische Verbindung zwischen Zugfahrzeug und Anhänger zwischenzuschalten. Auf diese Weise kann ein Eingriff in eine elektrische Anlage des Zugfahrzeugs oder des Anhängers weitgehend vermieden werden. Vorzugsweise weist der Adapter ein Gehäuse auf. Das Gehäuse ist vorzugsweise spritzwassergeschützt und kann eine gute Wärmeableitung gewährleisten, so dass das Gehäuse auch bei hoher Belastung berührt werden kann, ohne dass gefährliche Zustände entstehen. Mit dem Adapter kann eine einfache Bedienung erreicht werden. Das Gehäuse kann ferner einen Steckverbinder und/oder eine Steckkupplung aufweisen. Hierdurch ist es möglich, den Adapter in eine Steckverbindung zwischen dem Anhänger und dem Zugfahrzeug einfach durch Zwischenstecken zwischenzuschalten und auf diese Weise die vorteilhafte Funktion der Erfindung zu realisieren. Vorzugsweise ist ein Verpolungsschutz vorgesehen, so dass auch eine Bedienung durch einen technischen Laien gefahrlos möglich ist.

Mit der Erfindung wird ferner ein Verfahren vorgeschlagen nach den Merkmalen gemäß Anspruch 11.

Spannungsquelle des Zugfahrzeugs ist hier nicht nur eine Batterie oder ein Akkumulator, sondern auch eine entsprechende Steuerung, die eine Leuchte des Anhängers ansteuern soll. Insofern kann die Spannungsquelle des Zugfahrzeugs auch geschaltet sein, beispielsweise durch einen Bremsschalter, einen Blinkerschalter oder dergleichen. Wie oben bereits beschrieben, kann mit dem Verfahren eine Anpassung des für eine Glühlampe ausgelegten Anschlusses des Zugfahrzeugs an eine leuchtdiodenbasierte anhängerseitige Leuchte erreicht werden. Dabei erlaubt es die Erfindung, dass an der elektrischen Anlage des Zugfahrzeugs beziehungsweise des Anhängers keinerlei Veränderungen vorgenommen werden müssen.

Es wird ferner vorgeschlagen, dass der Verbrauchsstrom mit einem zweiten Vergleichswert verglichen wird, wobei in Abhängigkeit eines Vergleichsergebnisses die Glühlampensimulationseinheit deaktiviert wird. Diese Ausgestaltung erlaubt es, zu erkennen, ob anhängerseitig das Leuchtmittel der Leuchte des Anhängers durch eine Glühlampe oder durch eine Leuchtdiodenanordnung gebildet ist. Automatisch kann eine entsprechende Steuerung erreicht werden, so dass, sobald eine Glühlampe in einer Leuchte des Anhängers erkannt wird, die Glühlampensimulationseinheit deaktiviert wird, so dass ein normaler Betrieb ermöglicht werden kann. Es ist somit aus Nutzersicht nicht mehr erforderlich, zu prüfen, welche Leuchtmittel im Anhänger vorgesehen sind. Darüberhinaus erlaubt es diese Ausgestaltung, unterschiedliche Leuchtmittel bei Leuchten des Anhängers vorzusehen, ohne dass eine weitere Anpassung erforderlich wäre.

Es wird weiterhin vorgeschlagen, dass die Glühlampensimulationseinheit deaktiviert wird, wenn die Leuchte des Anhängers ein Störungssignal abgibt. Diese Ausgestaltung eignet sich insbesondere für Leuchtmittel, die eine eigene Störungsüberwachung enthalten und ein entsprechendes Signal aussenden. In diesem Fall erweist es sich als zweckmäßig, wenn die Glühlampensimulationseinheit deaktiviert wird, so dass das entsprechende Signal der Leuchte des Anhängers durch die Schaltungsanordnung hindurch zum Zugfahrzeug weitergeleitet werden kann. Die übergeordnete, zugfahrzeugseitige Steuerung kann dann das Signal erkennen und auswerten und eine entsprechende Meldung veranlassen. Auf diese Weise kann die Flexibilität der Schaltungsanordnung und des Verfahrens weiterverbessert werden. Nach einer weiteren Ausgestaltung kann vorgesehen sein, dass die Schaltungsanordnung erst nach einer vorgebbaren Zeit aktiviert wird. Dies kann beispielsweise dann von Vorteil sein, wenn die Schaltungsanordnung aus einem zugfahrzeugseitigen Steuersignal für die Leuchte des Anhängers mit Energie versorgt wird. So kann beispielsweise erreicht werden, dass die Diagnoseeinrichtung erst aktiviert wird, wenn ihre Energieversorgung stabil anliegt. Die Zuverlässigkeit hinsichtlich der Funktion kann weiterverbessert werden.

Gemäß einer weiteren Ausgestaltung kann eine Hysterese verwendet werden. Diese ist vorzugsweise für die Vergleichseinheit vorgesehen, so dass auch bei gestörten Signalleitungen eine sichere und zuverlässige Vergleichsfunktion erreicht werden kann. Auch können Funktionsbeeinträchtigungen aufgrund von Temperatur, Feuchtigkeit oder dergleichen reduziert werden.

Die Schaltungsanordnung weist erfindungsgemäß eine Anhängerdetektionsschaltung auf. Diese Schaltung dient dazu, ein zugfahrzeugseitiges Prüfpotential auf ein Massepotential zu legen, das vom Zugfahrzeug aus geliefert wird, um mittels einer zugfahrzeugseitigen, übergeordneten Steuerung detektieren zu können, ob ein Anhänger am Zugfahrzeug angeschlossen ist. Damit das Prüfpotential auch bei leuchtdiodenbasierten Anhängerleuchten verwendet werden kann, wird es über die Anhängerdetektionsschaltung zur Masse abgeleitet. Die Anhängerdetektionsschaltung wird hierfür durch einen mechanischen Kontakt aktiviert, der das Einstecken eines Anhängersteckers in eine Steckbuchse beziehungsweise Steckkupplung der Schaltungsanordnung detektiert. Auf diese Weise kann erreicht werden, dass das Anschließen eines Anhängers zuverlässig erkannt werden kann und das Prüfpotential keine unerwünschte Leuchtwirkung bei den Leuchtdioden hervorruft.

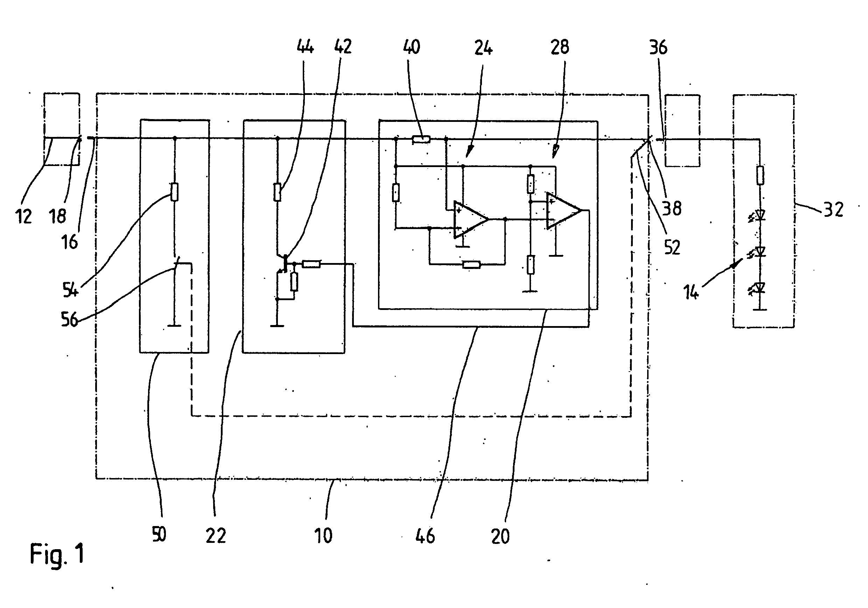

Weitere Vorteile und Merkmale sind der folgenden Beschreibung von zwei Ausführungsbeispielen zu entnehmen. Im Wesentlichen gleichbleibende Bauteile sind mit den gleichen Bezugszeichen bezeichnet. Ferner wird bezüglich gleicher Merkmale und Funktionen auf die Beschreibung zum Ausführungsbeispiel gemäß Fig. 1 verwiesen. Die Zeichnungen sind Schemazeichnungen und dienen lediglich der Erläuterung der folgenden Ausführungsbeispiele.

Es zeigen:
- Fig. 1:: schematisch ein Prinzipschaltbild für eine Schaltungsanordnung gemäß einem ersten Ausführungsbeispiel der Erfindung und
- Fig. 2:: schematisch ein Prinzipschaltbild für eine zweite Ausgestaltung gemäß der Erfindung.

Fig. 1 zeigt eine Schaltungsanordnung 10 zur Zwischenschaltung in eine elektrische Verbindung zwischen einem nicht näher bezeichneten Zugfahrzeug sowie einem nicht näher bezeichneten Anhänger. Vorliegend ist die Schaltungsanordnung für einen einzigen Kanal dargestellt, und zwar einen nicht näher bezeichneten Blinklichtkanal, wobei als Spannungsquelle ein durch einen Blinkerschalter geschalteter Blinklichtanschluss 12 im Cockpit des Zugfahrzeugs dient. Dieser ist im Zugfahrzeug auf einen zugfahrzeugseitigen Anschluss geführt, der über eine Steckverbindung mit einem Anschluss 16 der Schaltungsanordnung 10 verbindbar ist. Vorliegend ist vorgesehen, dass es sich bei der Steckverbindung bestehend aus dem zugfahrzeugseitigen Anschluss 18 sowie dem Anschluss 16 um eine 13-polige Steckverbindung handelt, wie sie für den Anschluss von Anhängern an Zugfahrzeugen üblich ist. Natürlich können auch andere Leuchten wie Bremsleuchten, Rückleuchten und/oder dergleichen mit der Schaltungsanordnung der Erfindung überwacht werden. Hierzu ist lediglich für jede zu überwachende Leuchte ein Kanal wie für die Blinklichtleuchte vorzusehen.

Weiterhin weist die Schaltungsanordnung 10 einen Anschluss 38 auf, der zur Verbindung mit einem anhängerseitigen Anschluss 36 ausgebildet ist. Der anhängerseitige Anschluss 36 ist elektrisch mit einer Anhängerleuchte 32 verbunden, die ihrerseits eine Leuchtdiodenanordnung als Beleuchtungsmittel aufweist.

Über einen niederohmigen elektrischen Widerstand 40 sind die Anschlüsse 16, 38 innerhalb der Schaltungsanordnung 10 miteinander in elektrischer Verbindung. Durch den Widerstand 40 fließt der Verbrauchsstrom der Anhängerleuchte 32.

Die Schaltungsanordnung 10 gemäß Fig. 1 umfasst vorliegend eine Glühlampensimulationsschaltung 22 sowie eine Diagnoseschaltung 20. Bedarfsweise kann für weitere Leuchtenkanäle die Schaltungsanordnung 10 erweitert sein, indem weitere Diagnose- und Glühlampensimulationsschaltungen vorgesehen werden.

Die Glühlampensimulationsschaltung 22 weist einen elektrischen Widerstand 44 auf, der mit seinem einen Anschluss mit dem Anschluss 16 der Schaltungsanordnung elektrisch verbunden ist und mit seinem anderen Anschluss in Serie zu einem Transistor 42 geschaltet ist. Vorliegend ist der Transistor 42 ein bipolarer Schalttransistor. An seiner Basis ist der Transistor 42 mit einer Widerstandsbeschaltung versehen, die mit einer Leitung 46 verbunden ist, über die der Transistor 42 und somit die Glühlampensimulationsschaltung einbeziehungsweise ausschaltbar ist.

Die Schaltungsanordnung 10 umfasst ferner eine Anhängerdetektionsschaltung 50, die in Serienschaltung einen elektrischen Widerstand 54 sowie einen Schaltkontakt 56 aufweist.

Mit der Anhängerdetektionsschaltung kann eine elektrische Verbindung zwischen dem Anschluss 16 und einem Bezugspotential hergestellt werden. Der Schaltkontakt 56 ist mittels einer mechanischen Betätigung 52 betätigbar, die durch Einstecken eines Steckergehäuses eines Anhängersteckers in eine entsprechende Steckkupplung der Schaltungsanordnung 10 einsteckbar ist. Durch Einstecken des Anhängersteckers wird der Schaltkontakt 56 geschlossen, so dass über den elektrischen Widerstand 54 ein vom Zugfahrzeug geliefertes Prüfpotential zur Detektion des Anhängers an Masse gelegt werden kann. Die Schaltungsanordnung erlaubt es somit, zugfahrzeugseitig die Anhängererkennung ohne Eingriffe in bestimmungsgemäßer Weise durchzuführen. Die Leitung 46 wird von der Diagnoseschaltung 20 gesteuert. Die Diagnoseschaltung 20 liefert hierfür über die Leitung 46 ein geeignetes Signal, mittels dem der Transistor 42 ein- beziehungsweise ausgeschaltet werden kann. Im eingeschalteten Zustand fließt vom Anschluss 16 ein Strom durch den elektrischen Widerstand 44 und den Transistor 42 zur Masse. Auf diese Weise wird eine zusätzliche elektrische Belastung erzeugt, so dass die Summenbelastung aus der Glühlampensimulationsschaltung 22 sowie der Anhängerleuchte 32 einem Stromverbrauch einer konventionellen Glühlampe entspricht. Auf diese Weise wird einer übergeordneten zugfahrzeugseitigen Steuerung das Vorhandensein einer Glühlampe simuliert, obwohl anhängerseitig eine Leuchtdiodenanordnung vorgesehen ist, die einen deutlich geringeren Energieverbrauch als eine vergleichbar leuchtstarke Glühlampe aufweist.

In der vorliegenden Ausgestaltung umfasst die Diagnoseschaltung 20 eine Strommesseinheit 24 sowie eine Vergleichseinheit 28. Die Strommesseinheit 24 ist vorliegend durch einen invertierend beschalteten Operationsverstärker gebildet, der eingangsseitig einen Spannungsabfall am elektrischen Widerstand 40 misst. Ausgangsseitig wird das Ausgangssignal des Operationsverstärkers auf den invertierenden Eingang eines weiteren, zur Vergleichseinheit 28 gehörenden Operationsverstärkers geführt, welcher dieses Ausgangssignal mit einem fest vorgegebenen Spannungswert an seinem positiven Eingang vergleicht. In Abhängigkeit des Vergleichs stellt sich entweder eine maximale oder eine minimale Ausgangsspannung am mit der Leitung 46 elektrisch verbundenen Ausgang des weiteren Operationsverstärkers ein. Dieses wird über die Leitung 46 an die Glühlampensimulationsschaltung 22 abgegeben und steuert diese.

Die vorliegende Schaltung ist zur Detektion von Unterbrechungsstörungen der Anhängerleuchte 32 ausgebildet. Sinkt der Spannungsabfall am elektrischen Widerstand 40 aufgrund einer Unterbrechung zur Anhängerleuchte 32 oder auch in der Leuchtdiodenanordnung 14 ab, so liefert die Strommesseinheit 24 ein Signal an die Vergleichseinheit 28, welches hinsichtlich seiner elektrischen Spannung größer ist, als der durch einen Spannungsteiler der Vergleichseinheit 28 eingestellte Vergleichswert. In diesem Fall liefert die Vergleichseinheit 28 als Ausgangssignal eine minimale Spannung im Bereich des Massepotentials, welches mittels der Leitung 46 an die Glühlampensimulationsschaltung 22 abgegeben wird. Hierdurch wird der Transistor 42 der Glühlampensimulationsschaltung 22 abgeschaltet. Die übergeordnete Fahrzeugsteuerung detektiert einen unzulässig niedrigen Stromverbrauch und stellt somit einen Defekt der Anhängerleuchte 32 fest, der über nicht näher bezeichnete Weise einem Führer des Zugfahrzeugs signalisiert wird.

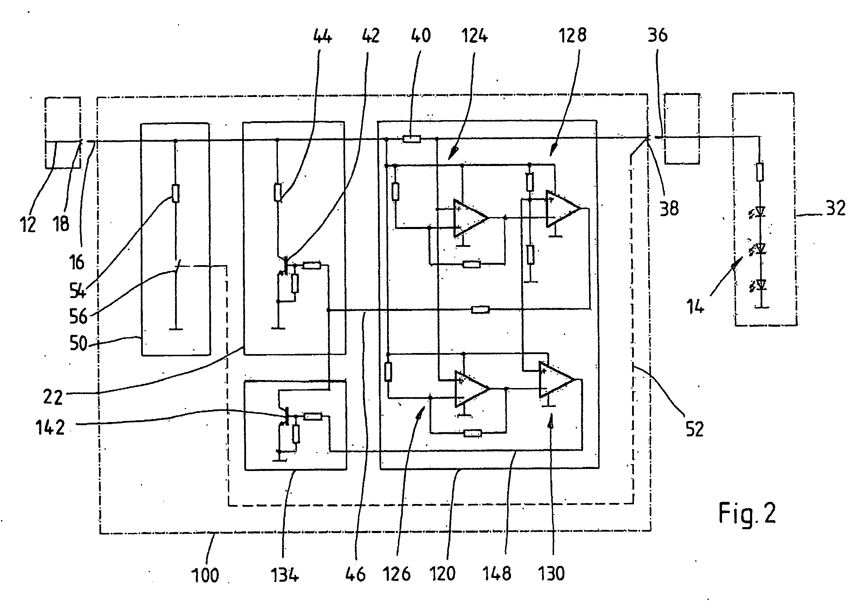

Wie aus Fig. 1 ersichtlich ist, werden die Operationsverstärker der Strommesseinheit 24 sowie der Vergleichseinheit 28 mit elektrischer Energie aus dem Blinklichtsignal des Zugfahrzeugs versorgt. Solange das Zugfahrzeug an seinem zugfahrzeugseitigen Anschluss 18 keine elektrische Spannung liefert, weil das Blinklicht nicht aktiv ist, ist die gesamte Schaltungsanordnung stromlos. Hierdurch kann ein besonders geringer Energieverbrauch erreicht werden. Es ist ferner anzumerken, dass selbstverständlich ein nicht bezeichnetes Bezugspotential der Schaltungsanordnung 10, dargestellt durch das Massezeichen in Fig. 1, sowohl mit einer Zugfahrzeugmasse als auch mit einer Anhängermasse elektrisch verbunden ist. Eine weitere Ausgestaltung der Erfindung findet sich in Fig. 2. Die Ausgestaltung gemäß Fig. 2 basiert auf der Ausgestaltung gemäß Fig. 1, weshalb bezüglich der diesbezüglichen Bauelemente und deren Funktionen auf die Beschreibung zum Ausführungsbeispiel gemäß Fig. 1 verwiesen wird.

Zusätzlich zur Ausgestaltung gemäß Fig. 1 umfasst die Ausgestaltung gemäß Fig. 2 eine Schaltungsanordnung 100, die neben der bereits bezüglich Fig. 1 diskutierten Glühlampensimulationsschaltung 22 eine Deaktivierungsschaltung 134 sowie eine Diagnoseschaltung 120 umfasst. Die Diagnoseschaltung 120 weist neben den Bauelementen, die bereits in der Diagnoseschaltung 20 der Fig. 1 enthalten waren, eine weitere Strommesseinheit 126 sowie eine weitere Vergleichseinheit 130 auf. Neben einer ersten Strommesseinheit 124 und einer ersten Vergleichseinheit 128 ist eine zweite Strommesseinheit 126 sowie eine zweite Vergleichseinheit 130 vorgesehen. Das Zusammenspiel der Strommesseinheiten 124, 126 mit den entsprechenden Vergleichseinheiten 128, 130 entspricht dem Zusammenspiel der Strommesseinheit 24 mit der Vergleichseinheit 28 der Fig. 1, weshalb diesbezüglich auf die obigen Ausführungen verwiesen wird. Im Übrigen entspricht die Funktion und Auslegung der Strommesseinheit 124 in Verbindung mit der Vergleichseinheit 128 der Strommesseinheit 24 in Verbindung mit der Vergleichseinheit 28 des vorhergehenden Ausführungsbeispiels gemäß Fig. 1.

Durch entsprechende Auslegung der Verstärkung des Operationsverstärkers der zweiten Strommesseinheit 126 wird eine zweite Schaltschwelle geschaffen, die durch die zweite Vergleichseinheit 130 realisiert ist. Vorliegend weisen die Vergleichseinheiten 128, 130 die gleichen Vergleichswerte auf. Die Verstärkung der zweiten Strommesseinheit 126 ist derart eingestellt, dass bei Überschreiten eines vorgebbaren Verbrauchsstroms ein positives Signal von der zweiten Vergleichseinheit 130 über eine Leitung 148 an eine Deaktivierungsschaltung 134 abgegeben wird. Die Deaktivierungsschaltung 134 weist ebenso wie die Glühlampensimulationsschaltung 22 einen Transistor 142 auf, der über ein Widerstandsnetzwerk durch eine elektrische Spannung auf der Leitung 148 steuerbar ist. Vorliegend ist der Transistor 142 ebenfalls als bipolarer Schalttransistor ausgebildet, dessen Emitter mit der Masse und dessen Kollektor mit der Leitung 46 elektrisch verbunden ist.

Detektiert nun die Diagnoseschaltung 120 einen Strom, der erheblich größer als der der Leuchtdiodenanordnung 14 ist, so wird über die Deaktivierungsschaltung 134 die Glühlampensimulationsschaltung 22 deaktiviert. Diese Ausgestaltung erweist sich somit als vorteilhaft, wenn ein Nutzer beziehungsweise ein Fahrzeugführer unwissentlich anstelle einer leuchtdiodenbasierten Anhängerleuchte 32 eine glühlampenbasierte Anhängerleuchte an die Schaltungsanordnung 100 anschließt. Die Schaltungsanordnung 100 ist somit in der Lage, automatisch zu erkennen, ob eine leuchtdioden- oder eine glühlampenbasierte Anhängerleuchte angeschlossen ist und stellt ihre Funktion entsprechend darauf ein. Natürlich kann die Leuchte des Anhängers auch Leuchtmittel unterschiedlicher Art kombiniert aufweisen, so dass ein Mischbetrieb vorliegt. So können beispielsweise Glühlampen und Leuchtdioden gemeinsam in einer Leuchte des Anhängers angeordnet und miteinander elektrisch verbunden sein. Die erfindungsgemäße Schaltungsanordnung erlaubt es, auch derartige Leuchten zuverlässig zu betreiben, beispielsweise indem die Schwellwerte der Vergleichseinheiten und/oder die Verstärkungen der Strommesseinheiten entsprechend eingestellt werden. Aus den Figuren nicht ersichtlich ist, dass die Schaltungsanordnungen 10, 100 mechanisch als Adapter ausgebildet sind, die in einem Gehäuse angeordnet sind und jeweils eine 13-polige Steckkupplung und einen 13-pligen Stecker aufweisen, so dass der Adapter in eine konventionelle Verbindung zwischen einem Zugfahrzeug und einem Anhänge zwischengeschaltet werden kann.

Natürlich können auch weitere Mittel vorgesehen sein, die es erlauben, die in der Glühlampensimulationsschaltung 22 verbrauchte elektrische Energie für andere Zwecke zu nutzen. So kann beispielsweise vorgesehen sein, dass mit der elektrischen Energie die Diagnoseschaltung 20, 120 versorgt wird.

Die in den Figuren dargestellten Ausführungsbeispiele dienen lediglich der Erläuterung der Erfindung und sind für diese nicht beschränkend. Der Fachmann kann weitere Abwandlungen und Kombinationen vorsehen, ohne den Schutzbereich der Erfindung zu verlassen. So können beispielsweise weitere Strommesseinheiten in Kombination mit Vergleichseinheiten vorgesehen sein, um weitere Schaltwerte zu erhalten, mit denen weitere Funktionen gesteuert werden können.

**Bezugszeichenliste**

| | | | |
|---|---|---|---|
| 10 | Schaltungsanordnung | 46 | Leitung |
| 12 | Bremsanschluss | 50 | Anhängerdetektionsschaltung |
| 14 | Leuchtdiodenanordnung | 52 | mechanische Betätigung |
| 16 | Anschluss | 54 | elektrischer Widerstand |
| 18 | Zugfahrzeugseitiger Anschluss | 56 | Schaltkontakt |
| 20 | Diagnoseschaltung | 100 | Schaltungsanordnung |
| 22 | Glühlampensimulationsschaltung | 120 | Diagnoseschaltung |
| 24 | Strommesseinheit | 124 | Erste Strommesseinheit |
| 28 | Vergleichseinheit | 126 | Zweite Stromeinheit |
| 32 | Anhängerleuchte | 128 | Erste Vergleichseinheit |
| 36 | Anhängerseitiger Anschluss | 130 | Zweite Vergleichseinheit |
| 38 | Anschluss | 134 | Deaktivierungsschaltung |
| 40 | Elektrischer Widerstand | 142 | Transistor |
| 42 | Transistor | 148 | Leitung |
| 44 | Elektrischer Widerstand | | |

## Patentansprüche

1. Schaltungsanordnung (10, 100) zur Zwischenschaltung in eine elektrische Verbindung zwischen einer Spannungsquelle (12) eines Zugfahrzeugs und einer in einem eingeschalteten und einem ausgeschalteten Zustand betreibbaren Leuchte (14) eines Zugfahrzeuganhängers, mit einem Anschluss (16) zur elektrischen Verbindung mit einem für eine Glühlampe ausgelegten zugfahrzeugseitigen Anschluss (18), einer Diagnoseeinrichtung (20, 120) sowie einer Glühlampensimulationseinheit (22), mittels welcher Glühlampensimulationseinheit (22) im eingeschalteten Zustand ein elektrischer Widerstand einer Glühlampe simulierbar ist, wobei die Diagnoseeinrichtung (20, 120) eine Strommesseinheit (24, 124, 126) und eine Vergleichseinheit (28, 128, 130) aufweist, wobei die Strommesseinheit (24, 124, 126) dazu ausgebildet ist, den Verbrauchsstrom der Leuchte (32) des Anhängers zu messen und ein entsprechendes Signal an die Vergleichseinheit (28, 128, 130) abzugeben, wobei die Vergleichseinheit (28, 128, 130) dazu ausgebildet ist, das gelieferte Signal der Strommesseinheit mit einem vorgebbaren Vergleichswert zu vergleichen, wobei die Glühlampensimulationseinheit (22) in Abhängigkeit des Vergleichsergebnisses steuerbar ist,
**gekennzeichnet durch**
eine Anhängerdetektionsschaltung (50), die dazu ausgebildet ist, ein vom Zugfahrzeug bereitzustellendes Prüfpotential auf ein Massepotential zu legen, zu welchem Zweck die Anhängerdetektionsschaltung (50) einen elektrischen Widerstand (54) und einen Schaltkontakt (56) aufweist, wobei der Schaltkontakt (56) mittels einer mechanischen Betätigung (52) **durch** Einstecken eines Anhängersteckers in eine Steckkupplung der Schaltungsanordnung (10, 100) betätigbar ist, wobei bei geschlossenem Schaltkontakt (56) über den elektrischen Widerstand (54) das vom Zugfahrzeug bereitzustellende Prüfpotential an Masse gelegt ist.

2. Schaltungsanordnung nach Anspruch 1, **gekennzeichnet durch** eine zweite Vergleichseinheit, die dazu ausgebildet ist, das von der Strommesseinheit gelieferte Signal mit einem zweiten vorgebbaren Vergleichswert zu vergleichen.

3. Schaltungsanordnung nach Anspruch 1, **gekennzeichnet durch** eine zweite Strommesseinheit (126), die dazu ausgebildet ist, den Verbrauchsstrom der Leuchte (32) des Anhängers misst und ein entsprechendes zweites Signal an eine zweite Vergleichseinheit (130) anzugeben.

4. Schaltungsanordnung nach Anspruch 3, **dadurch gekennzeichnet, dass** die zweite Vergleichseinheit (130) dazu ausgebildet ist, das zweite Signal mit einem zweiten vorgebbaren Vergleichswert zu vergleichen.

5. Schaltungsanordnung nach einem der Ansprüche 1 bis 4, **dadurch gekennzeichnet, dass** die erste und/oder die zweite Strommesseinheit (24, 124, 126) und/oder der erste und/oder der zweite Vergleichswert einstellbar ist.

6. Schaltungsanordnung nach einem der Ansprüche 1 bis 5, **gekennzeichnet durch** eine Deaktivierungsschaltung (134) für die Glühlampensimulationseinheit (22), welche Deaktivierungsschaltung (134) in Abhängigkeit des Vergleichsergebnisses des zweiten Signals mit dem zweiten Vergleichswert steuerbar ist.

7. Schaltungsanordnung nach einem der Ansprüche 1 bis 6, **dadurch gekennzeichnet, dass** die erste Strommesseinheit (24, 124), die zweite Strommesseinheit (126), die erste Vergleichseinheit (28, 128), die zweite Vergleichseinheit (130), die Glühlampensimulationseinheit (22) und/oder die Deaktivierungsschaltung (134) mit elektrischer Energie aus einem zugfahrzeugseitigen Steuersignal für die Leuchte (32) des Anhängers versorgbar ist.

8. Adapter mit einer Schaltungsanordnung nach einem der vorhergehenden Ansprüche.

9. Adapter nach Anspruch 8, **gekennzeichnet durch** ein Gehäuse.

10. Adapter nach Anspruch 8 oder 9, **dadurch gekennzeichnet, dass** das Gehäuse die Steckkupplung aufweist.

11. Verfahren zum Überwachen einer Anhängerleuchte (32), wobei eine Schaltungsanordnung (10, 100) in eine elektrische Verbindung zwischen einer Spannungsquelle (12) eines Zugfahrzeugs und einer in einem eingeschalteten und einem ausgeschalteten Zustand betreibbaren Leuchte (32) eines Zugfahrzeuganhängers geschaltet wird, wobei ein zugfahrzeugseitiger, für eine Glühlampe ausgelegter Anschluss (18) und ein anhängerseitiger, mit einer Leuchte (32) des Anhängers elektrisch verbundener Anschluss (36) mit der Schaltungsanordnung (10) verbunden werden, wobei eine Strommesseinheit (24, 124, 126) einer Diagnoseeinrichtung (20, 120) den Verbrauchsstrom der Leuchte (32) des Anhängers misst und ein entsprechendes Signal an eine Vergleichseinheit (28, 128, 130) der Diagnoseeinrichtung (20, 120) abgibt, wobei die Vergleichseinheit (28, 128, 130) das gelieferte Signal der Strommesseinheit (24, 124, 126) mit einem vorgebbaren Vergleichswert vergleicht, und wobei eine Glühlampensimulationseinheit (22) zur Simulation eines elektrischen Widerstands einer Glühlampe im eingeschalteten Zustand in Abhängigkeit des Vergleichsergebnisses gesteuert wird,
**dadurch gekennzeichnet,**
**dass** mittels einer Anhängerdetektionsschaltung (50) ein vom Zugfahrzeug bereitzustellendes Prüfpotential auf ein Massepotential gelegt wird, zu welchem Zweck ein Schaltkontakt (56) der Anhängerdetektionsschaltung (50) mittels einer mechanischen Betätigung (52) durch Einstecken eines Anhängersteckers in eine Steckkupplung der Schaltungsanordnung (10, 100) betätigt wird, wobei bei geschlossenem Schaltkontakt (56) über einen elektrischen Widerstand (54) der Anhängerdetektionsschaltung (50) das vom Zugfahrzeug bereitzustellende Prüfpotential an Masse gelegt wird.

12. Verfahren nach Anspruch 11, **dadurch gekennzeichnet, dass** der Verbrauchsstrom mit einem zweiten Vergleichswert verglichen wird, wobei die Glühlampensimulationseinheit (22) in Abhängigkeit des Vergleichsergebnisses deaktiviert wird.

13. Verfahren nach Anspruch 11 oder 12, **dadurch gekennzeichnet, dass** die Glühlampensimulationseinheit (22) deaktiviert wird, wenn die Leuchte (32) des Anhängers ein Störungssignal abgibt.

14. Verfahren nach einem der Ansprüche 11 bis 13, **dadurch gekennzeichnet, dass** für die Vergleichseinheit eine Hysterese verwendet wird.

## Claims

1. A circuit arrangement (10, 100) for being interposed in an electrical connection between a voltage source (12) of a towing vehicle and a light (14) of a towing vehicle trailer, which light can be operated in a switched-on and a switched-off state, comprising a connection (16) for the electrical connection with a connection (18) on the side of the towing vehicle which is designed for a light bulb, a diagnosis unit (20, 120) as well as a light bulb simulation unit (22), by means of which light bulb simulation unit (22) an electrical resistance of a light bulb can be simulated in the switched-on state, wherein the diagnosis unit (20, 120) comprises a current measuring unit (24, 124, 126) and a comparison unit (28, 128, 130), wherein the current measuring unit (24, 124, 126) is designed for measuring the consumed current of the light (32) of the trailer and for sending a corresponding signal to the comparison unit (28, 128, 130), wherein the comparison unit (28, 128, 130) is designed for comparing the delivered signal of the current measuring unit with a pre-determinable comparison value, wherein the light bulb simulation unit (22) can be controlled in dependence on the comparison result,
**characterized by**
a trailer detection circuit (50) which is designed for applying a test potential to be provided by the towing vehicle to a ground potential, for which purpose the trailer detection circuit (50) comprises an electrical resistor (54) and a switching contact (56), wherein the switching contact (56) can be actuated by means of a mechanical actuating device (52) by plugging a trailer connector into a plug coupling of the circuit arrangement (10, 100), wherein if the switching contact (56) is closed, the test potential to be provided by the towing vehicle is connected to ground via the electrical resistor (54).

2. A circuit arrangement according to claim 1, **characterized by** a second comparison unit which is designed for comparing the signal delivered by the current measuring unit with a second pre-determinable comparison value.

3. A circuit arrangement according to claim 1, **characterized by** a second current measuring unit (126) which is designed for measuring the consumed current of the light (32) of the trailer and sending a corresponding second signal to a second comparison unit (130).

4. A circuit arrangement according to claim 3, **characterized in that** the second comparison unit (130) is designed for comparing the second signal to a second pre-determinable comparison value.

5. A circuit arrangement according to one of the claims 1 through 4, **characterized in that** the first and/or the second current measuring unit (24, 124, 126) and/or the first and/or the second comparison value can be set.

6. A circuit arrangement according to one of the claims 1 through 5, **characterized by** a deactivation circuit (134) for the light bulb simulation unit (22), which deactivation circuit (134) can be controlled in dependence on the comparison result of the second signal with the second comparison value.

7. A circuit arrangement according to one of the claims 1 through 6, **characterized in that** the first current measuring unit (24, 124), the second current measuring unit (126), the first comparison unit (28, 128), the second comparison unit (130), the light bulb simulation unit (22) and/or the deactivation circuit (134) can be supplied with electrical energy from a control signal of the towing vehicle for the light (32) of the trailer.

8. An adapter comprising a circuit arrangement according to one of the preceding claims.

9. An adapter according to claim 8, **characterized by** a housing.

10. An adapter according to claim 8 or 9, **characterized in that** the housing comprises the plug coupling.

11. A method for monitoring a trailer light (32) wherein a circuit arrangement (10, 100) is interposed in an electrical connection between a voltage source (12) of a towing vehicle and a light (32) of a towing vehicle trailer, which light can be operated in a switched-on and a switched-off state, wherein a connection (18) on the side of the towing vehicle which is designed for a light bulb and a connection (36) on the side of the trailer which is electrically connected to a light (32) of the trailer are connected to the circuit arrangement (10), wherein a current measuring unit (24, 124, 126) of a diagnosis unit (20, 120) measures the consumed current of the light (32) of the trailer and sends a corresponding signal to a comparison unit (28, 128, 130) of the diagnosis unit (20, 120), wherein the comparison unit (28, 128, 130) compares the delivered signal of the current measuring unit (24, 124, 126) with a pre-determinable comparison value, and wherein a light bulb simulation unit (22) is controlled in dependence on the comparison result for simulating an electric resistance of a light bulb in the switched-on state,,
**characterized in**
**that** a test potential to be provided by the towing vehicle is connected to a ground potential by means of a trailer detection circuit (50), for which purpose a switching contact (56) of the trailer detection circuit (50) is actuated by means of a mechanical actuating device (52) by plugging a trailer connector into a plug coupling of the circuit arrangement (10, 100), wherein if the switching contact (56) is closed, the test potential to be provided by the towing vehicle is connected to ground via an electrical resistor (54) of the trailer detection circuit (50).

12. A method according to claim 11, **characterized in that** the consumed current is compared with a second comparison value, wherein the light bulb simulation unit (22) is deactivated in dependence on the comparison result.

13. A method according to claim 11 or 12, **characterized in that** the light bulb simulation unit (22) will be deactivated, if the light (32) of the trailer emits a failure signal.

14. A method according to one of the claims 11 through 13, **characterized in that** a hysteresis will be used for the comparison unit.

## Revendications

1. Agencement de circuit (10, 100) destiné à être interposé dans une liaison électrique entre une source de tension (12) d'un véhicule de traction et un feu (14) d'une remorque de véhicule de traction, lequel feu peut être présent dans un état allumé et un état non allumé, comprenant une borne (16) destinée à une liaison électrique avec une borne (18) du côté du véhicule de traction, laquelle borne est configurée pour une ampoule, un dispositif de diagnostic (20, 120) ainsi qu'une unité de simulation d'ampoule (22), par moyen de laquelle unité de simulation d'ampoule (22) dans l'état activé il est possible de simuler une résistance électrique d'une ampoule, le dispositif de diagnostic (20, 120) comprenant une unité de mesure de courant (24, 124, 126) et une unité de comparaison (28, 128, 130), l'unité de mesure de courant (24, 124, 126) étant configurée pour mesurer le courant consommé par le feu (32) de la remorque et pour envoyer un signal correspondant à l'unité de comparaison (28, 128, 130), l'unité de comparaison (28, 128, 130) étant configurée pour comparer le signal délivré par l'unité de mesure de courant avec une valeur de comparaison pré-déterminable, l'unité de simulation d'ampoule (22) pouvant être commandée en fonction du résultat de comparaison,
**caractérisé par**
un circuit de détection de remorque (50) qui est configuré pour appliquer un potentiel de test à fournir par le véhicule de traction à un potentiel de masse, dans quel but le circuit de détection de remorque (50) comprend une résistance électrique (54) et un contact de commutation (56), le contact de commutation (56) pouvant être actionné par moyen d'un dispositif d'actionnement mécanique (52) en insérant une fiche de remorque dans un coupleur enfichable de l'agencement de circuit (10, 100), et si le contact de commutation (56) est fermé, le potentiel de test à fournir par le véhicule de traction sera relié à la masse via une résistance électrique (54).

2. Agencement de circuit selon la revendication 1, **caractérisé par** une deuxième unité de comparaison qui est configurée pour comparer le signal délivré par l'unité de mesure de courant avec une deuxième valeur de comparaison pré-déterminable.

3. Agencement de circuit selon la revendication 1, **caractérisé par** une deuxième unité de mesure de courant (126) qui est configurée pour mesurer le courant consommé du feu (32) de la remorque et pour envoyer un deuxième signal correspondant à une deuxième unité de comparaison (130).

4. Agencement de circuit selon la revendication 3, **caractérisé en ce que** la deuxième unité de comparaison (130) est configurée pour comparer le deuxième signal avec une deuxième valeur de comparaison pré-déterminable.

5. Agencement de circuit selon l'une des revendications 1 à 4, **caractérisé en ce que** la première et/ou la deuxième unité de mesure de courant (24, 124, 126) et/ou la première et/ou la deuxième valeur de comparaison est réglable.

6. Agencement de circuit selon l'une des revendications 1 à 5, **caractérisé par** un circuit de désactivation (134) pour l'unité de simulation d'ampoule (22), lequel circuit de désactivation (134) peut être commandé en fonction du résultat de comparaison du deuxième signal avec la deuxième valeur de comparaison.

7. Agencement de circuit selon l'une des revendications 1 à 6, **caractérisé en ce que** la première unité de mesure de courant (24, 124), la deuxième unité de mesure de courant (126), la première unité de comparaison (28, 128), la deuxième unité de comparaison (130), l'unité de simulation d'ampoule (22) et/ou le circuit de désactivation (134) peut être alimenté en énergie électrique d'un signal de commande émis par le véhicule de traction pour le feu (32) de la remorque.

8. Adaptateur comprenant un agencement de circuit selon l'une des revendications précédentes.

9. Adaptateur selon la revendication 8, **caractérisé par** un boîtier.

10. Adaptateur selon la revendication 8 ou la revendication 9, **caractérisé en ce que** le boîtier comprend le coupleur enfichable.

11. Procédé de surveillance d'un feu de remorque (32), dans lequel un agencement de circuit (10, 100) est interposé dans une liaison électrique entre une source de tension (12) d'un véhicule de traction et un feu (32) d'une remorque de véhicule de traction, lequel feu peut être présent dans un état allumé et un état non allumé, une borne (18) du côté du véhicule de traction, laquelle est configurée pour une ampoule, et une borne (36) du côté de la remorque, laquelle est reliée électriquement à un feu (32) de la remorque, étant reliées à l'agencement de circuit (10), une unité de mesure de courant (24, 124, 126) d'un dispositif de diagnostic (20, 120) mesurant le courant consommé par le feu (32) de la remorque et envoyant un signal correspondant à une unité de comparaison (28, 128, 130) du dispositif de diagnostic (20, 120), l'unité de comparaison (28, 128, 130) comparant le signal délivré par l'unité de mesure de courant (24, 124, 126) avec une valeur de comparaison pré-déterminable, et l'unité de simulation d'ampoule (22) étant commandée en fonction du résultat de comparaison pour simuler une résistance électrique d'une ampoule dans l'état allumé,
**caractérisé en ce**
**qu'**un potentiel de test à fournir par le véhicule de traction est relié à un potentiel de masse par moyen d'un circuit de détection de remorque (50), dans quel but un contact de commutation (56) du circuit de détection de remorque (50) est actionné par moyen d'un dispositif d'actionnement mécanique (52) en insérant une fiche de remorque dans un coupleur enfichable de l'agencement de circuit (10, 100), et si le contact de commutation (56) est fermé, le potentiel de test à fournir par le véhicule de traction sera relié à la masse via une résistance électrique (54) du circuit de détection de remorque (50).

12. Procédé selon la revendication 11, **caractérisé en ce que** le courant consommé est comparé avec une deuxième valeur de comparaison, l'unité de simulation d'ampoule (22) étant désactivée en fonction du résultat de comparaison.

13. Procédé selon la revendication 11 ou la revendication 12, **caractérisé en ce que** l'unité de simulation d'ampoule (22) sera désactivée, si le feu (32) de la remorque émet un signal de perturbation.

14. Procédé selon l'une des revendications 11 à 13, **caractérisé en ce qu'**une hystérésis est utilisée pour l'unité de comparaison.
